# EUROPÄISCHE PATENTANMELDUNG

(11) **EP 3 395 136 A1**
(43) Veröffentlichungstag der Anmeldung: **31.10.2018**
(21) Anmeldenummer: 18401038.7
(22) Anmeldetag: 11.04.2018
(51) Int. Cl.: A01B 63/111

(54) **VERFAHREN ZUM EINSTELLEN DER ARBEITSTIEFE EINES LANDWIRTSCHAFTLICHEN BODENBEARBEITUNGSGERÄTS**

(30) Priorität: 27.04.2017 DE 102017108997
(71) Anmelder: Amazonen-Werke H. Dreyer GmbH & Co. KG, 49205 Hasbergen (DE)
(72) Erfinder: Rahe, Florian, 49504 Lotte (DE); Wermeling, Maik, 48432 Rheine (DE); Albert, Jörn, 49080 Osnabrück (DE); Fröschle, Heike, 49124 Georgsmarienhütte (DE); Ströbel-Fröschle, Markus, 49124 Georgsmarienhütte (DE)

(57) **Zusammenfassung**

Die Erfindung betrifft ein Verfahren zum Einstellen der Arbeitstiefe eines landwirtschaftlichen Bodenbearbeitungsgeräts (10), insbesondere eines Pflugs, mit den Schritten: Erfassen der Lage des landwirtschaftlichen Bodenbearbeitungsgeräts (10) relativ zu einem oder mehreren Bezugsobjekten und selbsttätiges Ändern der Arbeitstiefe des landwirtschaftlichen Bodenbearbeitungsgeräts (10) in Abhängigkeit der erfassten Lage des landwirtschaftlichen Bodenbearbeitungsgeräts (10) relativ zu dem einen oder den mehreren Bezugsobjekten.

## Beschreibung

Die Erfindung betrifft ein Verfahren zum Einstellen der Arbeitstiefe eines landwirtschaftlichen Bodenbearbeitungsgeräts nach dem Oberbegriff des Patentanspruchs 1 und ein landwirtschaftliches Bodenbearbeitungsgerät nach dem Oberbegriff des Patentanspruchs 9.

Die optimale Arbeitstiefe eines landwirtschaftlichen Bodenbearbeitungsgeräts hängt üblicherweise von der Beschaffenheit des zu bearbeitenden Bodens ab. Dies hat zur Folge, dass bei der Bearbeitung unterschiedlicher Böden verschiedene Arbeitstiefen einzustellen sind, um das gewünschte Bearbeitungsergebnis zu erzielen.

Zum Einstellen der Arbeitstiefe von landwirtschaftlichen Bodenbearbeitungsgeräten ist es bekannt, die Lage des landwirtschaftlichen Bodenbearbeitungsgeräts relativ zu einem oder mehreren Bezugsobjekten zu erfassen.

Die Druckschrift DE 199 45 853 A1 schlägt beispielsweise vor, die Ausrichtung eines Pflugs relativ zu einem Zugfahrzeug und zu dem Boden zu ermitteln. Die Druckschrift DE 10 2014 206 234 A1 schlägt die Erfassung des Abstandes eines Bodenbearbeitungsgeräts zu dem Boden in einem vorderen und einem hinteren Bereich des Bodenbearbeitungsgeräts vor.

In der Druckschrift WO 2017/007412 A1 ist ein Verfahren zum Ausrichten eines landwirtschaftlichen Geräts offenbart, wobei in dem Verfahren die aktuelle Ausrichtung des landwirtschaftlichen Geräts in Bezug auf eine vertikale Ebene berücksichtigt wird.

Ein anderer Ansatz ist die Erfassung der Zugkraft an der Kupplungseinrichtung zwischen der Zugmaschine und dem landwirtschaftlichen Bodenbearbeitungsgerät. Die Druckschrift EP 3 050 416 A1 beschreibt diese Lösung, um den Pflug stets in einer parallelen Ausrichtung zum Boden zu halten.

Die Druckschrift WO 2016/192973 A1 schlägt vor, aus der Neigung der Zugmaschine die Neigung des Arbeitsgeräts zu ermitteln, um auf dieser Grundlage die Lage des Arbeitsgeräts relativ zum Boden regeln zu können.

Aus der Druckschrift DE 10 2005 005 557 B4 ist die Verwendung einer Kamera bekannt, um mittels einer Auswerteeinheit aus den Kameraaufnahmen einzustellende Betriebsparameter für ein Bodenbearbeitungsgerät abzuleiten.

Diese und andere Lösungen sind jedoch entweder zu aufwendig, zu fehleranfällig oder erlauben keine dynamische Anpassung der Arbeitstiefe von landwirtschaftlichen Bodenbearbeitungsgeräten, welche zu zufriedenstellenden Bearbeitungsergebnissen führen.

Die der Erfindung zugrunde liegende Aufgabe besteht somit darin, die Einstellung der Arbeitstiefe bei landwirtschaftlichen Bodenbearbeitungsgeräten zu vereinfachen und/oder zu verbessern.

Die Aufgabe wird gelöst durch ein Verfahren der eingangs genannten Art, wobei die Arbeitstiefe des landwirtschaftlichen Bodenbearbeitungsgeräts in Abhängigkeit der erfassten Lage des landwirtschaftlichen Bodenbearbeitungsgeräts relativ zu dem einen oder den mehreren Bezugsobjekten selbsttätig geändert wird.

Die Erfindung macht sich die Erkenntnis zunutze, dass durch das selbsttätige Ändern der Arbeitstiefe des landwirtschaftlichen Bodenbearbeitungsgeräts in Abhängigkeit der erfassten Lage des landwirtschaftlichen Bodenbearbeitungsgeräts relativ zu dem einen oder den mehreren Bezugsobjekten die Einstellung der Arbeitstiefe des landwirtschaftlichen Bodenbearbeitungsgeräts erheblich beschleunigt wird und kontinuierlich erfolgen kann. Das selbsttätige Ändern der Arbeitstiefe des landwirtschaftlichen Bodenbearbeitungsgeräts erfolgt insbesondere derart, dass das landwirtschaftliche Bodenbearbeitungsgerät oder ein Rahmen des landwirtschaftlichen Bodenbearbeitungsgeräts parallel zum Boden ausgerichtet wird. Insbesondere, wenn das landwirtschaftliche Bodenbearbeitungsgerät mehrere hintereinander angeordnete Bodenbearbeitungswerkzeuge aufweist, wird durch eine Ausrichtung des landwirtschaftlichen Bodenbearbeitungsgeräts oder des Rahmens des landwirtschaftlichen Bodenbearbeitungsgeräts parallel zum Boden ein gleichmäßiges Bearbeitungsergebnis über die gesamte Maschinenlänge erreicht. Das erfindungsgemäße Verfahren kann vor der Bearbeitung des Bodens durch das landwirtschaftliche Bodenbearbeitungsgerät und/oder während der Bearbeitung des Bodens durch das landwirtschaftliche Bodenbearbeitungsgerät erfolgen.

In einer besonders bevorzugten Ausführungsform des erfindungsgemäßen Verfahrens umfasst das selbsttätige Ändern der Arbeitstiefe des landwirtschaftlichen Bodenbearbeitungsgeräts in Abhängigkeit der erfassten Lage des landwirtschaftlichen Bodenbearbeitungsgeräts relativ zu dem einen oder den mehreren Bezugsobjekten das Bereitstellen eines Sollzustands des landwirtschaftlichen Bodenbearbeitungsgeräts, das Vergleichen der erfassten Lage des landwirtschaftlichen Bodenbearbeitungsgeräts relativ zu dem einen oder den mehreren Bezugsobjekten mit dem Sollzustand des landwirtschaftlichen Bodenbearbeitungsgeräts und/oder das Erzeugen eines Steuerungssignals zum Ändern der Arbeitstiefe des landwirtschaftlichen Bodenbearbeitungsgeräts auf Grundlage des Vergleichs der erfassten Lage des landwirtschaftlichen Bodenbearbeitungsgeräts relativ zu dem einen oder den mehreren Bezugsobjekten mit dem Sollzustand des landwirtschaftlichen Bodenbearbeitungsgeräts. Der Sollzustand des landwirtschaftlichen Bodenbearbeitungsgeräts kann beispielsweise einen oder mehrere Abstandswerte des landwirtschaftlichen Bodenbearbeitungsgeräts zu dem einen oder den mehreren Bezugsobjekten und/oder einen oder mehrere Winkelwerte umfassen, wobei der eine oder die mehreren Winkelwerte die Ausrichtung des landwirtschaftlichen Bodenbearbeitungsgeräts relativ zu dem einen oder den mehreren Bezugsobjekten betreffen.

In einer weiteren Ausführungsform des erfindungsgemäßen Verfahrens umfasst das Bereitstellen des Sollzustands des landwirtschaftlichen Bodenbearbeitungsgeräts das manuelle Eingeben des Sollzustands des landwirtschaftlichen Bodenbearbeitungsgeräts durch einen Gerätebediener, das Berechnen des Sollzustands des landwirtschaftlichen Bodenbearbeitungsgeräts in Abhängigkeit von digitalem Kartenmaterial und/oder das Berechnen des Sollzustands des landwirtschaftlichen Bodenbearbeitungsgeräts in Abhängigkeit von Sensordaten. Das manuelle Eingeben des Sollzustands des landwirtschaftlichen Bodenbearbeitungsgeräts durch einen Gerätebediener kann beispielsweise über eine Eingabeeinrichtung an dem landwirtschaftlichen Bodenbearbeitungsgerät, über eine Eingabeeinrichtung an einer das landwirtschaftliche Bodenbearbeitungsgerät ziehenden Zugmaschine und/oder über ein signalleitend mit dem landwirtschaftlichen Bodenbearbeitungsgerät verbundenes stationäres oder mobiles Endgerät, wie einem Personal Computer, einem Laptop, einem Tablet oder einem Mobiltelefon, erfolgen. Wenn das Berechnen des Sollzustands des landwirtschaftlichen Bodenbearbeitungsgeräts in Abhängigkeit von digitalem Kartenmaterial erfolgt, kann das Kartenmaterial beispielsweise auf einem geräteinternen Speicher des landwirtschaftlichen Bodenbearbeitungsgeräts gespeichert sein und/oder von einem entfernt positionierten Zentralrechner abgerufen werden, insbesondere über das Internet und/oder unter Berücksichtigung des aktuellen Standorts des landwirtschaftlichen Bodenbearbeitungsgeräts. Wenn das Berechnen des Sollzustands des landwirtschaftlichen Bodenbearbeitungsgeräts in Abhängigkeit von Sensordaten erfolgt, können die Sensordaten beispielsweise von Sensoren des landwirtschaftlichen Bodenbearbeitungsgeräts und/oder von Sensoren einer das landwirtschaftliche Bodenbearbeitungsgerät ziehenden Zugmaschine bereitgestellt werden. Die Sensordaten können beispielsweise Daten zur Beschaffenheit, insbesondere zur Feuchtigkeit, des von dem landwirtschaftlichen Bodenbearbeitungsgerät zu bearbeitenden Bodens umfassen.

In einer vorteilhaften Weiterbildung des erfindungsgemäßen Verfahrens ist ein Bezugsobjekt der von dem landwirtschaftlichen Bodenbearbeitungsgerät zu bearbeitende Boden. Vorzugsweise umfasst das Erfassen der Lage des landwirtschaftlichen Bodenbearbeitungsgeräts relativ zu dem einen oder den mehreren Bezugsobjekten das Erfassen der Ausrichtung des landwirtschaftlichen Bodenbearbeitungsgeräts zu dem Boden, das Erfassen des Abstands eines ersten Punkts eines Rahmens des landwirtschaftlichen Bodenbearbeitungsgeräts zu dem Boden und/oder das Erfassen des Abstands eines zweiten Punkts eines Rahmens des landwirtschaftlichen Bodenbearbeitungsgeräts zu dem Boden. Der erste Punkt befindet sich vorzugsweise in einem vorderen Bereich des Rahmens des landwirtschaftlichen Bodenbearbeitungsgeräts. Der zweite Punkt befindet sich vorzugsweise in einem hinteren Bereich des Rahmens des landwirtschaftlichen Bodenbearbeitungsgeräts. Das Erfassen der Ausrichtung des landwirtschaftlichen Bodenbearbeitungsgeräts zu dem Boden erfolgt beispielsweise über eine Berechnung, welche die Abstände des ersten Punkts und des zweiten Punkts des Rahmens des landwirtschaftlichen Bodenbearbeitungsgeräts zu dem Boden und die Ausmaße des landwirtschaftlichen Bodenbearbeitungsgeräts berücksichtigt.

Das erfindungsgemäße Verfahren wird außerdem dadurch vorteilhaft weitergebildet, dass der Sollzustand des landwirtschaftlichen Bodenbearbeitungsgeräts einen Wert oder einen Wertebereich für den Sollabstand des ersten Punkts des Rahmens des landwirtschaftlichen Bodenbearbeitungsgeräts zu dem Boden und/oder einen Wert oder einen Wertebereich für den Sollabstand des zweiten Punkts des Rahmens des landwirtschaftlichen Bodenbearbeitungsgeräts zu dem Boden umfasst. Der Wert oder Wertebereich für den Sollabstand des ersten Punkts und/oder des zweiten Punkts des Rahmens des landwirtschaftlichen Bodenbearbeitungsgeräts zu dem Boden kann beispielsweise von der Bodenbeschaffenheit, der Fahrgeschwindigkeit und/oder der Art, der Anzahl, der Größe und/oder der Ausrichtung der Bodenbearbeitungswerkzeuge des landwirtschaftlichen Bodenbearbeitungsgeräts abhängen.

In einer anderen Ausführungsform des erfindungsgemäßen Verfahrens ist ein Bezugsobjekt eine das landwirtschaftliche Bodenbearbeitungsgerät ziehende Zugmaschine. Vorzugsweise umfasst das Erfassen der Lage des landwirtschaftlichen Bodenbearbeitungsgeräts relativ zu dem einen oder den mehreren Bezugsobjekten das Erfassen der Neigung des landwirtschaftlichen Bodenbearbeitungsgeräts zu der Zugmaschine und/oder das Erfassen des Höhenversatzes des landwirtschaftlichen Bodenbearbeitungsgeräts zu der Zugmaschine. Die Neigung des landwirtschaftlichen Bodenbearbeitungsgeräts zu der Zugmaschine kann beispielsweise die Neigung um eine quer zur Fahrtrichtung verlaufende Achse und/oder die Neigung um eine parallel zur Fahrtrichtung verlaufende Achse umfassen. Das Erfassen der Lage des landwirtschaftlichen Bodenbearbeitungsgeräts relativ zu der Zugmaschine kann alternativ oder zusätzlich zur dem Erfassen der Lage des landwirtschaftlichen Bodenbearbeitungsgeräts relativ zu dem von dem landwirtschaftlichen Bodenbearbeitungsgerät zu bearbeitenden Boden erfolgen.

Das erfindungsgemäße Verfahren wird außerdem dadurch vorteilhaft weitergebildet, dass das Erfassen der Lage des landwirtschaftlichen Bodenbearbeitungsgeräts relativ zu dem einen oder den mehreren Bezugsobjekten mittels einer oder mehreren Kameras, insbesondere 3D-Kameras, einem oder mehreren Laserscannern, einer oder mehreren Abstandsmesseinrichtungen und/oder einer oder mehreren Neigungsmesseinrichtungen erfolgt. Die eine oder die mehreren Kameras, insbesondere 3D-Kameras, und/oder der eine oder die mehreren Laserscanner können an dem landwirtschaftlichen Bodenbearbeitungsgerät und/oder an der das landwirtschaftliche Bodenbearbeitungsgerät ziehenden Zugmaschine angeordnet sein. Die eine oder die mehreren Abstandsmesseinrichtungen und/oder die eine oder mehreren Neigungsmesseinrichtungen sind vorzugsweise an dem Rahmen des landwirtschaftlichen Bodenbearbeitungsgeräts angeordnet.

In einer anderen Ausführungsform des erfindungsgemäßen Verfahrens umfasst das selbsttätige Ändern der Arbeitstiefe des landwirtschaftlichen Bodenbearbeitungsgeräts das Ändern der Länge eines Oberlenkers einer Kupplungseinrichtung einer das landwirtschaftliche Bodenbearbeitungsgerät ziehenden Zugmaschine, das Ändern der Höhe eines Unterlenkers oder mehrerer Unterlenker der Kupplungseinrichtung der das landwirtschaftliche Bodenbearbeitungsgerät ziehenden Zugmaschine und/oder das Ändern der Höhe eines Stützrades des landwirtschaftlichen Bodenbearbeitungsgeräts. Die Kupplungseinrichtung der das landwirtschaftliche Bodenbearbeitungsgerät ziehenden Zugmaschine ist beispielsweise als Dreipunkt-Kraftheber ausgebildet. Das Ändern der Länge des Oberlenkers der Kupplungseinrichtung umfasst vorzugsweise das Einfahren oder Ausfahren eines Stellglieds, wie beispielsweise eines Stellzylinders. Alternativ oder zusätzlich kann das Ändern der Länge des Oberlenkers der Kupplungseinrichtung das Eindrehen oder Rausdrehen eines Verstellglieds des Oberlenkers, insbesondere mittels eines Elektromotors, umfassen. Das Ändern der Höhe des einen Unterlenkers oder der mehreren Unterlenker der Kupplungseinrichtung kann das Absenken, Anheben und/oder Verschwenken des einen oder der mehreren Unterlenker umfassen und/oder mittels eines oder mehrerer Stellglieder, wie beispielsweise Stellzylindern, erfolgen.

In einer alternativen Ausführungsform des erfindungsgemäßen Verfahrens umfasst das selbsttätige Ändern der Arbeitstiefe des landwirtschaftlichen Bodenbearbeitungsgeräts das Ändern der Länge eines Oberlenkers einer Kupplungseinheit des landwirtschaftlichen Bodenbearbeitungsgeräts und/oder das Ändern der Höhe eines Unterlenkers oder mehrerer Unterlenker der Kupplungseinheit des landwirtschaftlichen Bodenbearbeitungsgeräts. Das Ändern der Länge des Oberlenkers der Kupplungseinheit umfasst vorzugsweise das Einfahren oder Ausfahren eines Stellglieds, wie beispielsweise eines Stellzylinders. Alternativ oder zusätzlich kann das Ändern der Länge des Oberlenkers der Kupplungseinheit das Eindrehen oder Rausdrehen eines Verstellglieds des Oberlenkers, insbesondere mittels eines Elektromotors, umfassen. Das Ändern der Höhe des einen Unterlenkers oder der mehreren Unterlenker der Kupplungseinheit kann das Absenken, Anheben und/oder Verschwenken des einen oder der mehreren Unterlenker umfassen und/oder mittels eines oder mehrerer Stellglieder, wie beispielsweise Stellzylindern, erfolgen. Ferner kann das erfindungsgemäße Verfahren das Anheben und/oder das Absenken der Kupplungseinheit des landwirtschaftlichen Bodenbearbeitungsgeräts gegenüber der Zugmaschine umfassen, beispielsweise mittels eines oder mehrerer Stellzylinder, wobei der eine oder die mehreren Stellzylinder als Hubzylinder ausgebildet sein können. Die Kupplungseinheit des landwirtschaftlichen Bodenbearbeitungsgeräts kann auch als Pflugturm bezeichnet werden, wenn das landwirtschaftliche Bodenbearbeitungsgerät als Pflug ausgebildet ist.
Die der Erfindung zugrunde liegende Aufgabe wird außerdem durch ein landwirtschaftliches Bodenbearbeitungsgerät der eingangs genannten Art gelöst, wobei das landwirtschaftliche Bodenbearbeitungsgerät dazu eingerichtet ist, dessen Arbeitstiefe selbsttätig in Abhängigkeit der erfassten Lage des landwirtschaftlichen Bodenbearbeitungsgeräts relativ zu dem einen oder den mehreren Bezugsobjekten zu ändern. Hinsichtlich der Vorteile und Modifikationen des erfindungsgemäßen landwirtschaftlichen Bodenbearbeitungsgeräts wird auf die Vorteile und Modifikationen des erfindungsgemäßen Verfahrens verwiesen.

In einer besonders bevorzugten Ausführungsform umfasst das erfindungsgemäße landwirtschaftliche Bodenbearbeitungsgerät eine Steuerungseinrichtung, welche dazu eingerichtet ist, die erfasste Lage des landwirtschaftlichen Bodenbearbeitungsgeräts relativ zu dem einen oder den mehreren Bezugsobjekten mit einem Sollzustand zu vergleichen und/oder ein Steuerungssignal zum Ändern der Arbeitstiefe des landwirtschaftlichen Bodenbearbeitungsgeräts auf Grundlage des Vergleichs der erfassten Lage des landwirtschaftlichen Bodenbearbeitungsgeräts relativ zu dem einen oder den mehreren Bezugsobjekten mit dem Sollzustand zu erzeugen. Beispielsweise umfasst das landwirtschaftliche Bodenbearbeitungsgerät eine Speichereinrichtung, auf welcher ein oder mehrere Sollzustände gespeichert sind. Alternativ oder zusätzlich umfasst das landwirtschaftliche Bodenbearbeitungsgerät ein Kommunikationsmodul, über welches ein Sollzustand für die vorliegende Situation oder Informationen zum Berechnen eines Sollzustands für die vorliegende Situation abrufbar sind.

In einer bevorzugten Weiterbildung umfasst das erfindungsgemäße landwirtschaftliche Bodenbearbeitungsgerät eine Eingabeeinrichtung, welche zum manuellen Eingeben des Sollzustands des landwirtschaftlichen Bodenbearbeitungsgeräts durch einen Gerätebediener eingerichtet ist. Die Eingabeeinrichtung kann beispielsweise einen oder mehrere drucksensitive Eingabeelemente, wie Tasten oder Knöpfe, und/oder einen Touchscreen umfassen. Die Eingabeeinrichtung kann auch als mobile Eingabeeinrichtung ausgebildet sein, welche beispielsweise dazu eingerichtet ist, drahtlos mit der Steuerungseinrichtung zu kommunizieren. Dies erlaubt beispielsweise die Anordnung der Eingabeeinrichtung im Führerhaus der das landwirtschaftliche Bodenbearbeitungsgerät ziehenden Zugmaschine, sodass der Gerätebediener während der Bodenbearbeitung Eingaben über die Eingabeeinrichtung machen kann.

In einer anderen Ausführungsform umfasst das erfindungsgemäße landwirtschaftliche Bodenbearbeitungsgerät eine Speichereinrichtung, auf welcher digitales Kartenmaterial gespeichert ist, wobei die Steuerungseinrichtung dazu eingerichtet ist, den Sollzustand des landwirtschaftlichen Bodenbearbeitungsgeräts in Abhängigkeit von dem digitalen Kartenmaterial auf der Speichereinrichtung zu berechnen. Das digitale Kartenmaterial umfasst beispielsweise eine oder mehrere Feldkarten und/oder Informationen zu der Beschaffenheit des zu bearbeitenden Bodens. Die Informationen zu der Beschaffenheit des zu bearbeitenden Bodens können beispielsweise Informationen zu der Feuchte und/oder der Dichte des zu bearbeitenden Bodens umfassen. Insbesondere umfasst das Bodenbearbeitungsgerät ein Satellitennavigationsmodul, welches beispielsweise als GPS-Modul ausgebildet sein kann, mittels welchem stets der aktuelle Standort des landwirtschaftlichen Bodenbearbeitungsgeräts bestimmbar ist. Über den aktuellen Standort können aus dem digitalen Kartenmaterial die für die Einstellung der Arbeitstiefe relevante Umgebungsinformationen abgeleitet werden. Umgebungsinformationen, welche für die Einstellung der Arbeitstiefe relevant sind, können beispielsweise Feldkonturen sein, sodass durch eine Verstellung des landwirtschaftlichen Bodenbearbeitungsgeräts auch beim Befahren von Senken und/oder Kuppen eine einheitliche Bearbeitungstiefe erzielt wird.

Bevorzugt ist außerdem ein erfindungsgemäßes landwirtschaftliches Bodenbearbeitungsgerät mit zumindest einem Bodensensor, welcher dazu eingerichtet ist, die Beschaffenheit des zu bearbeitenden Bodens zu erfassen, wobei die Steuerungseinrichtung dazu eingerichtet ist, den Sollzustand des landwirtschaftlichen Bodenbearbeitungsgeräts in Abhängigkeit von der Beschaffenheit des zu bearbeitenden Bodens zu berechnen. Der Bodensensor kann beispielsweise dazu eingerichtet sein, die Feuchtigkeit, die Dichte und/oder die Form des Bodens zu erfassen.

In einer Weiterbildung des erfindungsgemäßen landwirtschaftlichen Bodenbearbeitungsgeräts umfasst die Erfassungseinrichtung eine oder mehrere Kameras, insbesondere 3D-Kameras, welche dazu eingerichtet sind, die Ausrichtung des landwirtschaftlichen Bodenbearbeitungsgeräts zu der Zugmaschine zu erfassen. Alternativ oder zusätzlich umfasst die Erfassungseinrichtung einen oder mehrere Laserscanner, welche dazu eingerichtet sind, die Ausrichtung des landwirtschaftlichen Bodenbearbeitungsgeräts zu der Zugmaschine zu erfassen. Die eine oder die mehreren Kameras, insbesondere 3D-Kameras, und/oder der eine oder die mehreren Laserscanner können an dem landwirtschaftlichen Bodenbearbeitungsgerät und/oder an der das landwirtschaftliche Bodenbearbeitungsgerät ziehenden Zugmaschine angeordnet sein.

Ferner ist ein erfindungsgemäßes landwirtschaftliches Bodenbearbeitungsgerät bevorzugt, bei welchem die Erfassungseinrichtung eine oder mehrere Abstandsmesseinrichtungen aufweist, welche dazu eingerichtet sind, den Abstand eines ersten Punkts und/oder eines zweiten Punkts eines Rahmens des landwirtschaftlichen Bodenbearbeitungsgeräts zu dem Boden zu erfassen. Alternativ oder zusätzlich umfasst die Erfassungseinrichtung eine oder mehrere Neigungsmesseinrichtungen, welche dazu eingerichtet sind, die Neigung des Rahmens des landwirtschaftlichen Bodenbearbeitungsgeräts zu erfassen. Die eine oder die mehreren Abstandsmesseinrichtungen und/oder die eine oder die mehreren Neigungsmesseinrichtungen sind vorzugsweise an dem Rahmen des landwirtschaftlichen Bodenbearbeitungsgeräts angeordnet. Die eine oder die mehreren Abstandsmesseinrichtungen und/oder die eine oder die mehreren Neigungsmesseinrichtungen sind vorzugsweise an dem Rahmen des landwirtschaftlichen Bodenbearbeitungsgeräts angeordnet.

In einer anderen Ausführungsform umfasst das erfindungsgemäße landwirtschaftliche Bodenbearbeitungsgerät eine Höhenverstelleinrichtung, welche dazu eingerichtet ist, die Höhe eines Stützrades des landwirtschaftlichen Bodenbearbeitungsgeräts zum Ändern der Arbeitstiefe des landwirtschaftlichen Bodenbearbeitungsgeräts zu verstellen. Alternativ oder zusätzlich kann das landwirtschaftliche Bodenbearbeitungsgerät dazu eingerichtet sein, Steuerungssignale, welche das Einstellen der Länge eines Oberlenkers und/oder das Einstellen der Höhe der Unterlenker einer Kupplungseinrichtung der Zugmaschine veranlassen, an die Zugmaschine zu senden. Alternativ oder zusätzlich umfasst das landwirtschaftliche Bodenbearbeitungsgerät einen eigenen Oberlenker und/oder eigene Unterlenker, wobei die Länge des Oberlenkers des landwirtschaftlichen Bodenbearbeitungsgeräts und/oder die Höhe der Unterlenker des landwirtschaftlichen Bodenbearbeitungsgeräts einstellbar sind. Auf diese Weise kann eine Einstellung der Arbeitstiefe des landwirtschaftlichen Bodenbearbeitungsgeräts erfolgen, ohne dass die Kupplungseinrichtung der Zugmaschine betätigt werden muss.

Weitere Einzelheiten der Erfindung sind der Figurenbeschreibung und den Zeichnungen zu entnehmen. Es zeigen
- Fig. 1: ein Ausführungsbeispiel des erfindungsgemäßen landwirtschaftlichen Bodenbearbeitungsgeräts mit einer Zugmaschine; und
- Fig. 2: Teile eines erfindungsgemäßen landwirtschaftlichen Bodenbearbeitungsgeräts in einer schematischen Darstellung.

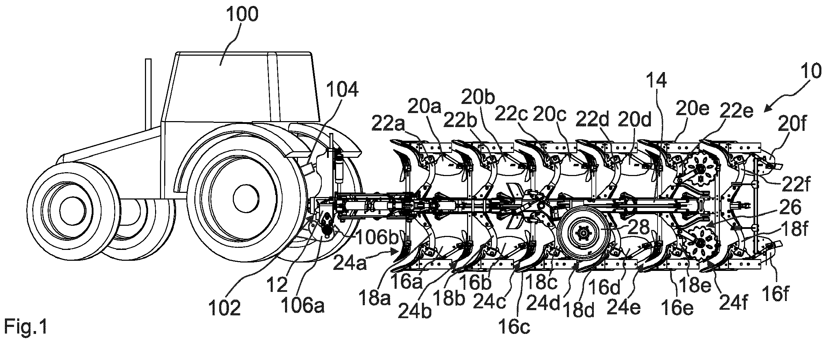

Die Fig. 1 zeigt ein als Pflug ausgebildetes landwirtschaftliches Bodenbearbeitungsgerät 10, welches über eine geräteseitige Kupplungseinrichtung 12 mit einer Kupplungseinrichtung 102 einer als Traktor ausgebildeten Zugmaschine 100 verbunden ist.

Die Kupplungseinrichtung 102 der Zugmaschine 100 umfasst einen Oberlenker 104 und zwei Unterlenker 106a, 106b und ist als Dreipunkt-Kraftheber ausgeführt. Der Oberlenker 104 der maschinenseitigen Kupplungseinrichtung 102 weist einen Stellzylinder auf, über welchen die Länge des Oberlenkers 104 verstellbar ist. Die Unterlenker 106a, 106b sind ebenfalls mit Stellzylinder verbunden, über welche die Höhe der Unterlenker 106a, 106b einstellbar ist.

Die Kupplungseinrichtung 12 des landwirtschaftlichen Bodenbearbeitungsgeräts 10 ist mit einem Rahmen 14 verbunden. An dem Rahmen 14 sind untere als Grindeln ausgebildete Tragarme 18a-18f angeordnet, an welchen Bodenbearbeitungswerkszeugen 16a-16f angeordnet sind, welche als Pflugkörper ausgebildet sind. An dem Rahmen 14 sind außerdem obere als Grindeln ausgebildete Tragarme 22a-22f angeordnet, an welchen Bodenbearbeitungswerkszeugen 20a-20f angeordnet sind, welche als Pflugkörper ausgebildet sind. Zwischen den als Pflugkörper ausgebildeten Bodenbearbeitungswerkzeugen 16a-16f, 20a-20f sind außerdem weitere Bodenbearbeitungswerkzeuge 24a-24f angeordnet, welche als Vorschäler ausgebildet sind. In einem hinteren Bereich des Rahmens 14 ist außerdem ein Scheibensech 26 angeordnet.

Ferner ist an dem Rahmen 14 eine verstellbare Radaufhängung angeordnet, an welcher ein Stützrad 28 befestigt ist. Die Höhe des Stützrades 28, also der Abstand des Stützrades 28 relativ zu dem Rahmen 14, ist über eine Höhenverstelleinrichtung einstellbar.

Das dargestellte landwirtschaftliche Bodenbearbeitungsgerät 10 ist dazu eingerichtet, die Lage des landwirtschaftlichen Bodenbearbeitungsgeräts 10 relativ zu einem oder mehreren Bezugsobjekten zu erfassen und dessen Arbeitstiefe selbsttätig in Abhängigkeit der erfassten Lage des landwirtschaftlichen Bodenbearbeitungsgeräts 10 relativ zu dem einen oder den mehreren Bezugsobjekten zu ändern.

Das Ändern der Arbeitstiefe des landwirtschaftlichen Bodenbearbeitungsgeräts 10 erfolgt dabei über das Einstellen der Höhe des Stützrades 28 und/oder über eine Verstellung des Oberlenkers 104 und/oder der Unterlenker 106a, 106b der Kupplungseinrichtung 102 der Zugmaschine 100. Hierzu stellt das landwirtschaftliche Bodenbearbeitungsgerät 10 der Zugmaschine 100 ein Steuerungssignal bereit, welches die Zugmaschine 100 dazu veranlasst, die Länge des Oberlenkers 104 und/oder die Höhe der Unterlenker 106a, 106b einzustellen.

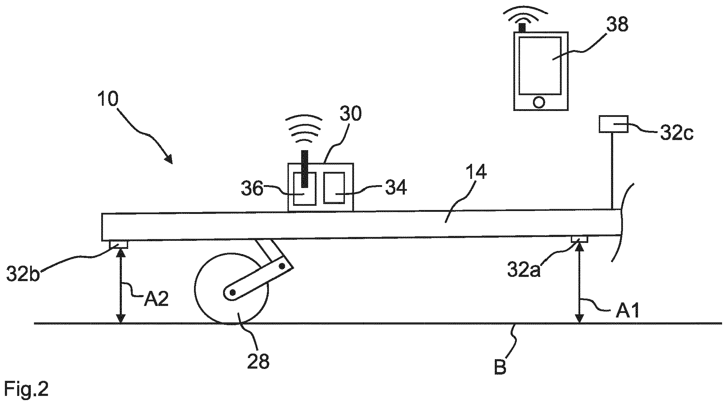

Die Fig. 2 zeigt Teile eines als Pflug ausgebildeten landwirtschaftlichen Bodenbearbeitungsgeräts 10. Das dargestellte landwirtschaftliche Bodenbearbeitungsgerät 10 kann beispielsweise das in der Fig. 1 gezeigte landwirtschaftliche Bodenbearbeitungsgerät 10 sein.

Das landwirtschaftliche Bodenbearbeitungsgerät 10 umfasst eine Steuerungseinrichtung 30, eine Erfassungseinrichtung 32a-32c und eine Eingabeeinrichtung 38.

Die Steuerungseinrichtung 30 umfasst eine Speichereinrichtung 34 und ein Kommunikationsmodul 36. Über das Kommunikationsmodul 36 ist die Steuerungseinrichtung 30 dazu in der Lage, drahtlos mit der Eingabeeinrichtung 38 und einer Zugmaschine (nicht dargestellt) zu kommunizieren.

Die Erfassungseinrichtung 32a-32c ist dazu eingerichtet, die Lage des landwirtschaftlichen Bodenbearbeitungsgeräts 10 relativ dem Boden B und der Zugmaschine zu erfassen, wobei das landwirtschaftliche Bodenbearbeitungsgerät 10 dazu eingerichtet ist, dessen Arbeitstiefe selbsttätig in Abhängigkeit der erfassten Lage des landwirtschaftlichen Bodenbearbeitungsgeräts 10 relativ zu dem Boden B und der Zugmaschine zu ändern.

Die Erfassungseinrichtung 32a-32c weist eine erste Abstandsmesseinrichtung 32a auf, welche dazu eingerichtet sind, den Abstand A1 eines ersten Punkts des Rahmens 14 des landwirtschaftlichen Bodenbearbeitungsgeräts 10 zu dem Boden B zu erfassen. Die Erfassungseinrichtung 32a-32c weist außerdem eine zweite Abstandsmesseinrichtung 32b auf, welche dazu eingerichtet sind, den Abstand A2 eines zweiten Punkts des Rahmens 14 des landwirtschaftlichen Bodenbearbeitungsgeräts 10 zu dem Boden B zu erfassen. Die beiden Abstandsmesseinrichtungen 32a, 32b sind an dem Rahmen 14 des landwirtschaftlichen Bodenbearbeitungsgeräts 10 angeordnet. Die Erfassungseinrichtung 32a-32c weist außerdem eine 3D-Kamera 32c auf, welche dazu eingerichtet ist, die Ausrichtung des landwirtschaftlichen Bodenbearbeitungsgeräts 10 zu der Zugmaschine zu erfassen.

Die Steuerungseinrichtung 30 ist dazu eingerichtet, die erfasste Lage des landwirtschaftlichen Bodenbearbeitungsgeräts 10 relativ zu dem Boden B und der Zugmaschine mit einem Sollzustand zu vergleichen und ein Steuerungssignal zum Ändern der Arbeitstiefe des landwirtschaftlichen Bodenbearbeitungsgeräts 10 auf Grundlage des Vergleichs der erfassten Lage des landwirtschaftlichen Bodenbearbeitungsgeräts 10 relativ zu dem Boden B und der Zugmaschine mit dem Sollzustand zu erzeugen.

Der Sollzustand umfasst dabei einen Wert für einen Sollabstand des ersten Punkts des Rahmens 14 des landwirtschaftlichen Bodenbearbeitungsgeräts 10 zu dem Boden B, einen Wert für einen Sollabstand des zweiten Punkts des Rahmens 14 des landwirtschaftlichen Bodenbearbeitungsgeräts 10 zu dem Boden B und eine Sollausrichtung des landwirtschaftlichen Bodenbearbeitungsgeräts 10 zu der Zugmaschine.

Die Sollzustände für die jeweiligen Betriebssituationen können beispielweise über die Eingabeeinrichtung 38 manuell durch einen Gerätebediener eingeben werden. Alternativ können die Sollzustände für die jeweiligen Betriebssituationen durch die Steuerungseinrichtung 30 berechnet werden. Hierzu ruft die Steuerungseinrichtung 30 digitales Kartenmaterial von der Speichereinrichtung 34 ab und berechnet in Abhängigkeit von dem digitalen Kartenmaterial einen Sollzustand für die vorliegende Betriebssituation.

Das landwirtschaftliche Bodenbearbeitungsgerät 10 weist eine Höhenverstelleinrichtung auf, welche dazu eingerichtet ist, die Höhe des Stützrades 28 des landwirtschaftlichen Bodenbearbeitungsgeräts 10 zum Ändern der Arbeitstiefe des landwirtschaftlichen Bodenbearbeitungsgeräts 10 zu verstellen. Außerdem ist die Steuerungseinrichtung 30 dazu eingerichtet der Zugmaschine ein Steuerungssignal bereitzustellen, welches die Zugmaschine dazu veranlasst, die Länge eines Oberlenkers und/oder die Höhe von Unterlenkern einer Kupplungseinrichtung der Zugmaschine einzustellen.

### Bezugszeichenliste

- 10: landwirtschaftliches Bodenbearbeitungsgerät
- 12: Kupplungseinrichtung
- 14: Rahmen
- 16a-16f: Bodenbearbeitungswerkzeuge
- 18a-18f: Tragarme
- 20a-20f: Bodenbearbeitungswerkzeuge
- 22a-22f: Tragarme
- 24a-24f: Bodenbearbeitungswerkzeuge
- 26: Scheibensech
- 28: Stützrad
- 30: Steuerungseinrichtung
- 32a-32c: Erfassungseinrichtung
- 34: Speichereinrichtung
- 36: Kommunikationsmodul
- 38: Eingabeeinrichtung

- A1, A2: Abstände
- B: Boden

- 100: Zugmaschine
- 102: Kupplungseinrichtung
- 104: Oberlenker
- 106a, 106b: Unterlenker

## Patentansprüche

1. Verfahren zum Einstellen der Arbeitstiefe eines landwirtschaftlichen Bodenbearbeitungsgeräts (10), insbesondere eines Pflugs, mit dem Schritt:
- Erfassen der Lage des landwirtschaftlichen Bodenbearbeitungsgeräts (10) relativ zu einem oder mehreren Bezugsobjekten;
**gekennzeichnet durch** den Schritt:
- selbsttätiges Ändern der Arbeitstiefe des landwirtschaftlichen Bodenbearbeitungsgeräts (10) in Abhängigkeit der erfassten Lage des landwirtschaftlichen Bodenbearbeitungsgeräts (10) relativ zu dem einen oder den mehreren Bezugsobjekten.

2. Verfahren nach Anspruch 1,
**dadurch gekennzeichnet, dass** das selbsttätige Ändern der Arbeitstiefe des landwirtschaftlichen Bodenbearbeitungsgeräts (10) in Abhängigkeit der erfassten Lage des landwirtschaftlichen Bodenbearbeitungsgeräts (10) relativ zu dem einen oder den mehreren Bezugsobjekten zumindest einen der folgenden Schritte umfasst:
- Bereitstellen eines Sollzustands des landwirtschaftlichen Bodenbearbeitungsgeräts (10);
- Vergleichen der erfassten Lage des landwirtschaftlichen Bodenbearbeitungsgeräts (10) relativ zu dem einen oder den mehreren Bezugsobjekten mit dem Sollzustand des landwirtschaftlichen Bodenbearbeitungsgeräts (10);
- Erzeugen eines Steuerungssignals zum Ändern der Arbeitstiefe des landwirtschaftlichen Bodenbearbeitungsgeräts (10) auf Grundlage des Vergleichs der erfassten Lage des landwirtschaftlichen Bodenbearbeitungsgeräts (10) relativ zu dem einen oder den mehreren Bezugsobjekten mit dem Sollzustand des landwirtschaftlichen Bodenbearbeitungsgeräts (10).

3. Verfahren nach Anspruch 1 oder 2,
**dadurch gekennzeichnet, dass** das Bereitstellen des Sollzustands des landwirtschaftlichen Bodenbearbeitungsgeräts (10) zumindest einen der folgenden Schritte umfasst:
- manuelles Eingeben des Sollzustands des landwirtschaftlichen Bodenbearbeitungsgeräts (10) durch einen Gerätebediener;
- Berechnen des Sollzustands des landwirtschaftlichen Bodenbearbeitungsgeräts (10) in Abhängigkeit von digitalem Kartenmaterial;
- Berechnen des Sollzustands des landwirtschaftlichen Bodenbearbeitungsgeräts (10) in Abhängigkeit von Sensordaten.

4. Verfahren nach einem der vorstehenden Ansprüche,
**dadurch gekennzeichnet, dass** ein Bezugsobjekt der von dem landwirtschaftlichen Bodenbearbeitungsgerät (10) zu bearbeitende Boden (B) ist,
wobei das Erfassen der Lage des landwirtschaftlichen Bodenbearbeitungsgeräts (10) relativ zu dem einen oder den mehreren Bezugsobjekten vorzugsweise zumindest einen der folgenden Schritte umfasst:
- Erfassen der Ausrichtung des landwirtschaftlichen Bodenbearbeitungsgeräts (10) zu dem Boden (B);
- Erfassen des Abstands (A1) eines ersten Punkts eines Rahmens (14) des landwirtschaftlichen Bodenbearbeitungsgeräts (10) zu dem Boden (B);
- Erfassen des Abstands (A2) eines zweiten Punkts eines Rahmens (14) des landwirtschaftlichen Bodenbearbeitungsgeräts (10) zu dem Boden (B).

5. Verfahren nach Anspruch 4,
**dadurch gekennzeichnet, dass** der Sollzustand des landwirtschaftlichen Bodenbearbeitungsgeräts (10) einen Wert oder einen Wertebereich für den Sollabstand des ersten Punkts des Rahmens (14) des landwirtschaftlichen Bodenbearbeitungsgeräts (10) zu dem Boden (B) und/oder einen Wert oder einen Wertebereich für den Sollabstand des zweiten Punkts des Rahmens (14) des landwirtschaftlichen Bodenbearbeitungsgeräts (10) zu dem Boden (B) umfasst.

6. Verfahren nach einem der vorstehenden Ansprüche,
**dadurch gekennzeichnet, dass** ein Bezugsobjekt eine das landwirtschaftliche Bodenbearbeitungsgerät (10) ziehende Zugmaschine (100) ist,
wobei das Erfassen der Lage des landwirtschaftlichen Bodenbearbeitungsgeräts (10) relativ zu dem einen oder den mehreren Bezugsobjekten vorzugsweise zumindest einen der folgenden Schritte umfasst:
- Erfassen der Neigung des landwirtschaftlichen Bodenbearbeitungsgeräts (10) zu der Zugmaschine (100);
- Erfassen des Höhenversatzes des landwirtschaftlichen Bodenbearbeitungsgeräts (10) zu der Zugmaschine (100).

7. Verfahren nach einem der vorstehenden Ansprüche,
**dadurch gekennzeichnet, dass** das Erfassen der Lage des landwirtschaftlichen Bodenbearbeitungsgeräts (10) relativ zu dem einen oder den mehreren Bezugsobjekten mittels einer oder mehreren Kameras, insbesondere 3D-Kameras, einem oder mehreren Laserscannern, einer oder mehreren Abstandsmesseinrichtungen und/oder einer oder mehreren Neigungsmesseinrichtungen erfolgt.

8. Verfahren nach einem der vorstehenden Ansprüche,
**dadurch gekennzeichnet, dass** das selbsttätige Ändern der Arbeitstiefe des landwirtschaftlichen Bodenbearbeitungsgeräts (10) zumindest einen der folgenden Schritte umfasst:
- Ändern der Länge eines Oberlenkers (104) einer Kupplungseinrichtung (102) einer das landwirtschaftliche Bodenbearbeitungsgerät (10) ziehenden Zugmaschine (100);
- Ändern der Höhe eines Unterlenkers (106a, 106b) oder mehrerer Unterlenker (106a, 106b) der Kupplungseinrichtung (102) der das landwirtschaftliche Bodenbearbeitungsgerät (10) ziehenden Zugmaschine (100);
- Ändern der Höhe eines Stützrades (28) des landwirtschaftlichen Bodenbearbeitungsgeräts (10).

9. Landwirtschaftliches Bodenbearbeitungsgerät (10), insbesondere Pflug, mit
- einer Erfassungseinrichtung (32a-32c), welche dazu eingerichtet ist, die Lage des landwirtschaftlichen Bodenbearbeitungsgeräts (10) relativ zu einem oder mehreren Bezugsobjekten zu erfassen;
**dadurch gekennzeichnet, dass** das landwirtschaftliche Bodenbearbeitungsgerät (10) dazu eingerichtet ist, dessen Arbeitstiefe selbsttätig in Abhängigkeit der erfassten Lage des landwirtschaftlichen Bodenbearbeitungsgeräts (10) relativ zu dem einen oder den mehreren Bezugsobjekten zu ändern.

10. Landwirtschaftliches Bodenbearbeitungsgerät (10) nach Anspruch 9,
**gekennzeichnet durch** eine Steuerungseinrichtung (30), welche dazu eingerichtet ist, die erfasste Lage des landwirtschaftlichen Bodenbearbeitungsgeräts (10) relativ zu dem einen oder den mehreren Bezugsobjekten mit einem Sollzustand zu vergleichen und/oder ein Steuerungssignal zum Ändern der Arbeitstiefe des landwirtschaftlichen Bodenbearbeitungsgeräts (10) auf Grundlage des Vergleichs der erfassten Lage des landwirtschaftlichen Bodenbearbeitungsgeräts (10) relativ zu dem einen oder den mehreren Bezugsobjekten mit dem Sollzustand zu erzeugen.

11. Landwirtschaftliches Bodenbearbeitungsgerät (10) nach Anspruch 9 oder 10,
**gekennzeichnet durch** eine Eingabeeinrichtung (38), welche zum manuellen Eingeben des Sollzustands des landwirtschaftlichen Bodenbearbeitungsgeräts (10) durch einen Gerätebediener eingerichtet ist.

12. Landwirtschaftliches Bodenbearbeitungsgerät (10) nach Anspruch 10 oder 11,
**gekennzeichnet durch** eine Speichereinrichtung (34), auf welcher digitales Kartenmaterial gespeichert ist, wobei die Steuerungseinrichtung (30) dazu eingerichtet ist, den Sollzustand des landwirtschaftlichen Bodenbearbeitungsgeräts (10) in Abhängigkeit von dem digitalen Kartenmaterial auf der Speichereinrichtung (34) zu berechnen.

13. Landwirtschaftliches Bodenbearbeitungsgerät (10) nach einem der Ansprüche 10 bis 12,
**gekennzeichnet durch** zumindest einen Bodensensor, welcher dazu eingerichtet ist, die Beschaffenheit des zu bearbeitenden Bodens (B) zu erfassen, wobei die Steuerungseinrichtung (30) dazu eingerichtet ist, den Sollzustand des landwirtschaftlichen Bodenbearbeitungsgeräts (10) in Abhängigkeit von der Beschaffenheit des zu bearbeitenden Bodens (B) zu berechnen.

14. Landwirtschaftliches Bodenbearbeitungsgerät (10) nach einem der Ansprüche 9 bis 13,
**dadurch gekennzeichnet, dass** die Erfassungseinrichtung (32a-32c) eine oder mehrere Kameras, insbesondere 3D-Kameras, welche dazu eingerichtet sind, die Ausrichtung des landwirtschaftlichen Bodenbearbeitungsgeräts (10) zu der Zugmaschine (100) zu erfassen, und/oder einen oder mehrere Laserscanner, welche dazu eingerichtet sind, die Ausrichtung des landwirtschaftlichen Bodenbearbeitungsgeräts (10) zu der Zugmaschine (100) zu erfassen, umfasst.

15. Landwirtschaftliches Bodenbearbeitungsgerät (10) nach einem der Ansprüche 9 bis 14,
**dadurch gekennzeichnet, dass** die Erfassungseinrichtung (32a-32c) eine oder mehrere Abstandsmesseinrichtungen, welche dazu eingerichtet sind, den Abstand (A1, A2) eines ersten Punkts und/oder eines zweiten Punkts eines Rahmens (14) des landwirtschaftlichen Bodenbearbeitungsgeräts (10) zu dem Boden (B) zu erfassen, und/oder eine oder mehrere Neigungsmesseinrichtungen, welche dazu eingerichtet sind, die Neigung des Rahmens (14) des landwirtschaftlichen Bodenbearbeitungsgeräts (10) zu erfassen, umfasst.

16. Landwirtschaftliches Bodenbearbeitungsgerät (10) nach einem der Ansprüche 9 bis 15,
**gekennzeichnet durch** eine Höhenverstelleinrichtung, welche dazu eingerichtet ist, die Höhe eines Stützrades (28) des landwirtschaftlichen Bodenbearbeitungsgeräts (10) zum Ändern der Arbeitstiefe des landwirtschaftlichen Bodenbearbeitungsgeräts (10) zu verstellen.
